# EUROPÄISCHE PATENTSCHRIFT

(11) **EP 4 217 640 B1**
(45) Veröffentlichungstag und Bekanntmachung des Hinweises auf die Patenterteilung: **21.05.2025**
(21) Anmeldenummer: 21765637.0
(22) Anmeldetag: 19.08.2021
(51) Int. Cl.: F17C 13/04, F16K 1/30, F16K 31/363, F16K 31/42

(54) **TANKVORRICHTUNG ZUR SPEICHERUNG EINES GASFÖRMIGEN MEDIUMS MIT EINER VENTILVORRICHTUNG**
TANK DEVICE FOR STORING A GASEOUS MEDIUM, COMPRISING A VALVE DEVICE
DISPOSITIF DE RÉSERVOIR POUR STOCKER UN MILIEU GAZEUX, COMPRENANT UN DISPOSITIF DE SOUPAPE

(30) Priorität: 23.09.2020 DE 102020211865
(43) Veröffentlichungstag der Anmeldung: 02.08.2023
(73) Patentinhaber: Robert Bosch GmbH, 70442 Stuttgart (DE)
(72) Erfinder: SCHAICH, Udo, 70378 Stuttgart (DE)
(86) Internationale Anmeldenummer: PCT/EP2021/073000
(87) Internationale Veröffentlichungsnummer: WO 2022/063493

(56) Entgegenhaltungen:
- EP-B1- 0 668 468
- WO-A1-2013/031191
- WO-A1-2015/129159
- DE-A1- 102012 210 943
- FR-A1- 2 544 834
- US-A1- 2007 090 317
- US-B2- 10 161 360

## Beschreibung

Die Erfindung betrifft eine Tankvorrichtung mit einer Ventilvorrichtung, insbesondere zur Speicherung von Wasserstoff, beispielsweise zur Anwendung in Fahrzeugen mit Brennstoffzellenantrieb oder in Fahrzeugen mit einem Wasserstoff-Verbrenner als Antrieb.

### Stand der Technik

Die DE 10 2018 201 055 A1 beschreibt eine Tankvorrichtung mit mindestens einer Speichereinheit, welche ein Steuerventil aufweist, und welche über ein Leitungssystem mit einer Ausgangsleitung verbunden ist. Dabei ist mindestens ein Steuerventil mindestens einer Speichereinheit als Hauptventil ausgebildet, und mindestens ein Steuerventil mindestens einer Speichereinheit ist als Nebenventil ausgebildet, wobei das Hauptventil und das Nebenventil unterschiedlich ausgebildet sind.

Die EP 0 668 468 B1 zeigt eine Tankvorrichtung zur Speicherung eines gasförmigen Mediums.

Die Sicherheitsvorrichtungen für solch eine Tankvorrichtung sind normiert. Dabei muss jede Tankvorrichtung solch ein Absperrventil aufweisen. So kann das Absperrventil bei einer Beschädigung der Tankvorrichtung hervorgerufen durch einen Unfall des Fahrzeugs mit beispielsweise Brennstoffzellenantrieb oder bei einem Bruch einer Leitung der Tankvorrichtung die Tankbehälter verschließen, so dass kein Gas aus der Tankvorrichtung austreten kann.

Aufgrund der hohen Sicherheitsanforderungen an die Absperrventile und aufgrund hoher Systemdrücke von beispielsweise 800 bar oder mehr sind solche Absperrventile konstruktiv sehr herausfordernd und weisen einen großen Bauraum auf. Dies erhöht wiederum das Gesamtgewicht der gesamten Tankvorrichtung, was im Falle eines Unfalls des Fahrzeugs mit beispielsweise Brennstoffzellenantrieb zu hohen auftretenden Beschleunigungskräften und möglichen Verformungen der Ventilvorrichtung oder der Tankvorrichtung führen kann.

### Vorteile der Erfindung

Die erfindungsgemäße Tankvorrichtung mit den kennzeichnenden Merkmalen des Anspruchs 1 weist demgegenüber den Vorteil auf, dass in konstruktiv einfacher und kostensparender Weise eine Tankvorrichtung zur Verfügung gestellt wird, welches ein kompakt ausgelegtes Sicherheitsventil mit geringen Öffnungskräften aufweist.

Dazu weist die Tankvorrichtung zur Speicherung eines gasförmigen Mediums, insbesondere Wasserstoff, eine Ventilvorrichtung und einen Tankbehälter auf. Die Ventilvorrichtung weist ein Ventilgehäuse auf, in welchem Ventilgehäuse ein entlang einer Längsachse der Tankvorrichtung bewegliches Vorsteuerventilelement angeordnet ist. Das Vorsteuerventilelement wirkt zum Öffnen und Schließen einer ersten Durchgangsöffnung mit einem ersten Dichtsitz zusammen und bildet so ein Vorsteuerventil aus. Weiterhin umfasst die Ventilvorrichtung eine Magnetspule, durch welche Magnetspule das Vorsteuerventilelement entlang der Längsachse der Tankvorrichtung bewegbar ist. In dem Ventilgehäuse ist ein Hauptventilelement angeordnet, welches Hauptventilelement zum Öffnen und Schließen einer zweiten Durchgangsöffnung mit einem zweiten Dichtsitz zusammenwirkt und so ein Hauptventil ausbildet, wobei der zweite Dichtsitz als konischer Absatz an dem Ventilgehäuse ausgebildet ist. Darüber hinaus weist das Vorsteuerventilelement eine Querbohrung senkrecht zu der Längsachse der Tankvorrichtung auf. Diese Querbohrung des Vorsteuerventilelements mündet in eine senkrecht zu der Längsachse der Tankvorrichtung angeordneten Querbohrung des Hauptventilelements. In der Querbohrung des Vorsteuerventilelements und in der Querbohrung des Hauptventilelements ist außerdem zumindest teilweise ein Mitnehmerelement angeordnet.

Weiterhin weist das Vorsteuerventilelement einen Absatz auf, an welchem Absatz sich eine Feder abstützt und das Vorsteuerventilelement mit einer Kraft in Richtung des einen Endes des Vorsteuerventilelements beaufschlagt. Bei Nicht-Bestromung der Magnetspule wirkt eine schließende Kraft auf das Vorsteuerventilelement und das Hauptventilelement über die Feder.

Außerdem ist zwischen dem Ventilgehäuse und einer Anformung des Hauptventilelements, welche Anformung zum Öffnen und Schließen der zweiten Durchgangsöffnung mit dem zweiten Dichtsitz zusammenwirkt, ein Drosselkanal ausgebildet, welcher Drosselkanal entgegen der Richtung des zweiten Dichtsitzes eine konische Erweiterung aufweist, wodurch eine Drosselwirkung ausgebildet ist.

So kann in einfacher Weise die Effizienz und die Funktionsweise der Ventilvorrichtung bei gleichzeitiger Kostenersparnis durch Minimierung der notwendigen magnetischen Kräfte für die Öffnung der Ventilvorrichtung optimiert werden. Weiterhin wird durch optimale Auslegung des magnetischen Flusses aufgrund optimierter Materialwahl, der Querschnittsdimensionierungen und der Gestaltung der Oberflächenstrukturen der Ventilvorrichtung der Magnetkreis verbessert und so eine kompakte und kostengünstige Ventilvorrichtung erzielt.

In erster vorteilhafter Weiterbildung ist das Mitnehmerelement stiftförmig ausgebildet. Die geometrische Gestaltung des Mitnehmerelements wird entsprechend der geforderten Funktionen angepasst, so dass eine optimale Funktionsweise der gesamten Ventilvorrichtung erzielt wird.

In vorteilhafter Weiterbildung ist an einem Ende des Vorsteuerventilelements ein Dauermagnet angeordnet ist, welcher Dauermagnet dergestalt in der Ventilvorrichtung angeordnet ist, dass ein Pluspolelement des Dauermagneten in Richtung eines Gehäusedeckels der Ventilvorrichtung und ein Minuspolelement des Dauermagneten in Richtung des Tankbehälters angeordnet ist. Weiterhin ist der Dauermagnet bei bestromter Magnetspule in einem Pluspolbereich eines von der Magnetspule erzeugten Dauermagnetenfelds angeordnet.

So kann in einfacher Weise eine optimale Ausbildung des magnetischen Flusses erzielt werden. Ein zweistufiger Öffnungsvorgang erfordert außerdem nur eine geringe magnetische Kraft für die Öffnung der Ventilvorrichtung. So wird ein geringer Strom- und Energiebedarf und damit eine positive Energiebilanz erzielt.

In weiterer Ausgestaltung der Erfindung ist es vorteilhaft vorgesehen, dass die Ventilvorrichtung bei bestromter Magnetspule in Richtung des Tankbehälters öffenbar ist. So wird eine konstruktiv einfache und kostengünstige Tankvorrichtung erzielt. Diese Ausgestaltung erlaubt außerdem, die elektrisch geführten Teile sowie den Magneten aus den Medien umspülten Bereichen herauszunehmen, ohne aufwändige Dichtkonzepte anwenden zu müssen.

In vorteilhafter Weiterbildung der Erfindung ist es vorgesehen, dass die Durchgangsöffnung in dem Ventilgehäuse auf Höhe des Drosselkanals ausgebildet ist und in den Drosselkanal mündet. Vorteilhafterweise ist in dem Ventilgehäuse eine Kammer ausgebildet, welche Kammer mittels der Durchgangsöffnung mit dem Drosselkanal verbunden ist. So wird in konstruktiv einfacher Weise der Öffnungsvorgang der Ventilvorrichtung begünstigt.

In vorteilhafter Weiterbildung der Erfindung ist es vorteilhaft vorgesehen, dass die Ventilvorrichtung in einem Halsbereich der Tankvorrichtung angeordnet und gegen einen Tankboden innerhalb des Halsbereichs gepresst ist. Aufgrund der konstruktiven Auslegung der Ventilvorrichtung innerhalb des Halsbereichs wird eine geringere Druckangriffsfläche erzielt, was geringere axiale Druckkräfte zur Folge hat. Bei hohen Drücken stellen geringere Druckangriffsflächen eine hohe Entlastung bezüglich Bauteilbelastungen dar, was sich in geringeren Verformungen, weniger Verschleiß und Dichtheitseinflüssen und einer erhöhten Lebensdauer der gesamten Tankvorrichtung und der Ventilvorrichtung widerspiegelt.

In weiterer Ausgestaltung der Erfindung ist es vorteilhaft vorgesehen, dass in dem Tankboden eine Entnahmeöffnung ausgebildet ist, welche einen Tankbehälterinnenraum und die Kammer fluidisch miteinander verbindet. In konstruktiv einfacher Weise kann so das Innere der Ventilvorrichtung mit einem Tankinnenraum der Tankvorrichtung verbunden werden.

In vorteilhafter Weiterbildung der Erfindung ist es vorgesehen, dass das Hauptventilelement mittels einer Feder mit einer Kraft in Richtung des Tankbehälterinnenraums beaufschlagt ist, wodurch das Hauptventilelement mit einer Kraft in Richtung des ersten Dichtsitzes und entgegen der Richtung des zweiten Dichtsitzes beaufschlagt ist.

In weiterer Ausgestaltung der Erfindung ist es vorteilhaft vorgesehen, dass in dem Ventilgehäuse ein Innenraum ausgebildet ist, welcher Innenraum durch das Hauptventilelement in einen ersten Teilinnenraum und einen zweiten Teilinnenraum aufgeteilt ist.

In vorteilhafter Weiterbildung der Erfindung ist es vorgesehen, dass der erste Teilinnenraum mittels eines in dem Ventilgehäuse ausgebildeten Absteuerkanals mit einer Zulaufleitung verbunden ist, welche Zulaufleitung mit einem Zulaufbereich eines Verbrauchersystems verbindbar ist.

Dadurch kann der Öffnungsvorgang der Ventilvorrichtung begünstigt werden, welcher geringe magnetische Kräfte benötigt, da der Öffnungsvorgang aufgrund der konstruktiven Auslegung der Ventilvorrichtung durch pneumatische Kräfte unterstützt wird.

Die beschriebene Tankvorrichtung eignet sich vorzugsweise in einem Brennstoffzellensystem zur Speicherung von Wasserstoff für den Betrieb einer Brennstoffzelle.

Die beschriebene Tankvorrichtung zur Speicherung von Wasserstoff für den Betrieb einer Brennstoffzelle eignet sich weiterhin vorteilhaft in einem brennstoffzellenbetriebenen Fahrzeug.

Die beschriebene Vorrichtung zur Speicherung von Wasserstoff eignet sich weiterhin vorteilhaft in einem wasserstoffbetriebenen Fahrzeug, d.h. in einem Fahrzeug mit einem Wasserstoff-Verbrenner als Antrieb.

### Zeichnungen

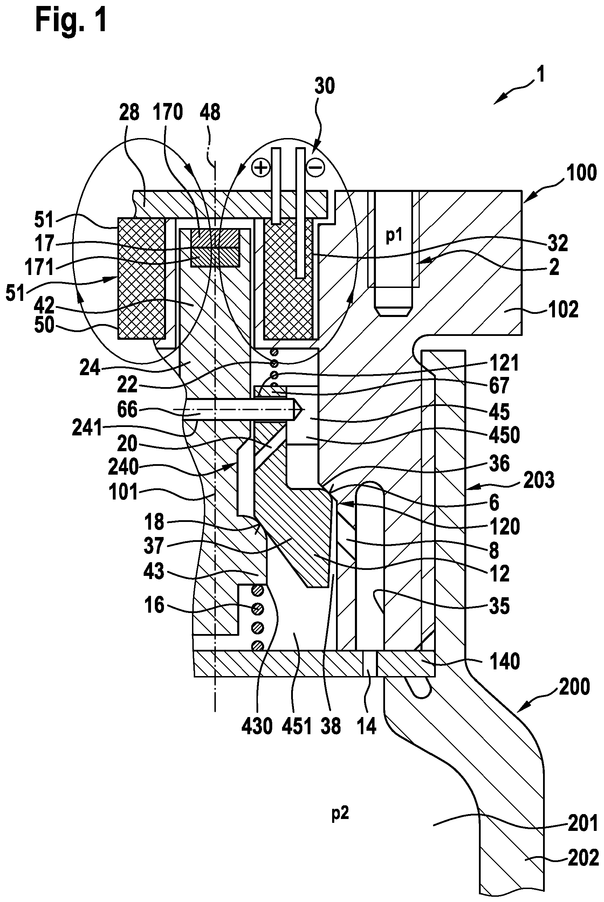

In der Zeichnung ist ein Ausführungsbeispiel einer erfindungsgemäßen Tankvorrichtung zur Speicherung eines gasförmigen Mediums, insbesondere Wasserstoff, dargestellt. Es zeigt in
- Fig. 1: ein Ausführungsbeispiel einer erfindungsgemäßen Tankvorrichtung mit einer Ventilvorrichtung im Längsschnitt.

### Beschreibung des Ausführungsbeispiels

**Fig.1** zeigt ein Ausführungsbeispiel einer erfindungsgemäßen Tankvorrichtung 1 mit einer Längsachse 48 im Längsschnitt und in vereinfachter Ansicht, wobei die Tankvorrichtung 1 rotationssymmetrisch um die Längsachse 48 ausgebildet ist.

Die Tankvorrichtung 1 weist einen Tankbehälter 200 und eine Ventilvorrichtung 100 auf, wobei die Ventilvorrichtung 100 teilweise in dem Tankbehälter 200 aufgenommen ist. Der Tankbehälter 200 weist ein Tankbehältergehäuse 202 auf, in dem ein Tankbehälterinnenraum 201 ausgebildet ist.

Weiterhin weist der Tankbehälter 200 einen Halsbereich 203 auf, in dem die Ventilvorrichtung 100 teilweise aufgenommen ist. Dabei stützt sich die Ventilvorrichtung 100 an einem Tankboden 140 ab, welcher zwischen dem Halsbereich 203 und dem Tankbehälterinnenraum 201 angeordnet und so der Tankbehälterinnenraum 201 von dem Halsbereich 203 abgegrenzt ist.

Die Ventilvorrichtung 100 weist ein Ventilgehäuse 102 auf, in dem eine Magnetspule 32 angeordnet ist, welche mittels eines elektrischen Anschlusses 30 mit Strom versorgbar ist. Dabei ist die Durchführung des elektrischen Anschlusses 30 in einem magnetisierbaren Gehäusedeckel 28 ausgebildet.

An einem Ende 42 des Vorsteuerventilelements 24 ist ein Dauermagnet 17 angeordnet, welcher ein Pluspolelement 170 und ein Minuspolelement 171 aufweist. Das Pluspolelement 170 des Dauermagneten 17 weist dabei in Richtung des Gehäusedeckels 28 der Ventilvorrichtung 100 und das Minuspolelement 171 des Dauermagneten 17 ist in Richtung des Tankbehälters 200 angeordnet. Weiterhin ist der Dauermagnet 17 dergestalt in der Ventilvorrichtung 100 angeordnet, dass dieser bei bestromter Magnetspule 32 in einem Pluspolbereich 51 eines von der Magnetspule 32 erzeugten Dauermagnetfelds 52 angeordnet ist.

Außerdem ist der Gehäusedeckel 28 hier aus einem nicht-magnetischen Material hergestellt, um die magnetischen Kraftfelder und damit die Bewegungsrichtung des Vorsteuerventilelements 24 bei bestromter Magnetspule 32 in Richtung des Tankbehälterinnenraums 201 zu führen.

Weiterhin ist in dem Ventilgehäuse 102 ein Innenraum 45 ausgebildet, in dem ein Vorsteuerventilelement 24 und ein Hauptventilelement 12 angeordnet sind.

Das Vorsteuerventilelement 24 ist koaxial zu der Längsachse 48 angeordnet und weist stufenförmige Ausnehmungen und einen abgerundeten Absatz 43 auf, welcher an einem gegenüberliegenden Ende als Stufe 430 ausgebildet ist. An dieser Stufe 430 stützt sich eine Feder 16 ab, welche sich ebenfalls an dem Tankboden 140 abstützt und das Vorsteuerventilelement 24 mit einer Kraft in Richtung der Magnetspule 32 - in der **Fig.1** nach oben - beaufschlagt.

Parallel zu dem Vorsteuerventilelement 24 ist ein Hauptventilelement 12 angeordnet, welches im Wesentlichen L-förmig mit einer Anformung 37 ausgebildet ist. Zusätzlich weist das Hauptventilelement 12 eine erste Durchgangsöffnung 20 auf, durch welche ein erster Teilinnenraum 450 und ein zweiter Teilinnenraum 451 fluidisch verbindbar sind. Der Innenraum 45 ist durch das Hauptventilelement 12 in den ersten Teilinnenraum 450 und den zweiten Teilinnenraum 451 geteilt.

Das Hauptventilelement 12 ist durch eine Feder 22 vorgespannt und wird durch diese gegen den abgerundeten Absatz 43 gedrückt, wobei sich die Feder 22 an dem Ventilgehäuse 102 abstützt. An dem Hauptventilelement 12 ist somit ein erster Dichtsitz 18 ausgebildet, welcher zusammen mit dem Hauptventilelement 12 zum Öffnen und Schließen einer Verbindung zwischen dem ersten Teilinnenraum 450 und dem zweiten Teilinnenraum 451 und damit zum Öffnen und Schließen der ersten Durchgangsöffnung 20 zusammenwirkt und so ein Vorsteuerventil 240 ausbildet.

Durch das Vorsteuerventilelement 24 wird das Hauptventilelement 12 mit einer Kraft entgegen der Kraft der Feder 22 beaufschlagt und so mit seiner Anformung 37 gegen einen an dem Ventilgehäuse 102 konisch ausgebildeten zweiten Dichtsitz 6 gedrückt. Die schließende Kraft wird dabei durch den Druck im Tankbehälterinnenraum 201 und die Kraft der Feder 16 unterstützt. Die schließende Kraft sorgt im ausgeschalteten und nicht bestromten Zustand für ein sicheres Schließen des Hauptventilelements 12. Dadurch wirkt das Hauptventilelement 12 zum Öffnen und Schließen einer in dem Ventilgehäuse 102 ausgebildeten zweiten Durchgangsöffnung 8 mit dem zweiten Dichtsitz 18 zusammen und bildet so ein Hauptventil 120 aus.

Zwischen dem Ventilgehäuse 102 und der Anformung 37 des Hauptventilelements 12 ist ein Drosselkanal 38 ausgebildet, welcher entgegen der Richtung des zweiten Dichtsitzes 6 eine konische Erweiterung aufweist, wodurch eine Drosselwirkung ausgebildet ist.

Die zweite Durchgangsöffnung 8 ist auf Höhe des Drosselkanals 38 ausgebildet und mündet in den Drosselkanal 38. Weiterhin mündet die zweite Durchgangsöffnung 8 in eine in dem Ventilgehäuse 102 ausgebildete Kammer 35, welche über in dem Tankboden 140 ausgebildete Entnahmeöffnungen 14 mit dem Tankbehälterinnenraum 201 verbunden ist.

Der erste Teilinnenraum 450 ist mittels eines in dem Ventilgehäuse 102 ausgebildeten Absteuerkanals 2 mit einer Zulaufleitung 40 verbunden, welche mit einem Zulaufbereich eines Verbrauchersystems verbindbar ist. Im Absteuerkanal 2 bildet sich der Systemdruck p₁ aus.

Weiterhin weist das Vorsteuerventilelement 24 eine Querbohrung 241 senkrecht zu der Längsachse 48 der Tankvorrichtung 1 auf. Ebenso weist das Hauptventilelement 12 eine senkrecht zu der Längsachse 48 angeordnete Querbohrung 121 auf, welche in die Querbohrung 241 des Vorsteuerventilelements 24 mündet. In der Querbohrung 241 des Vorsteuerventilelements 24 und in der Querbohrung 121 des Hauptventilelements 120 ist ein stiftförmig ausgebildetes Mitnehmerelement 66 angeordnet. Das Mitnehmerelement 66 ragt zudem in den ersten Teilinnenraum 450 hinein.

Geometrisch weitere Ausführungen des Mitnehmerelements 66 sind neben der stiftförmigen Ausbildung ebenfalls möglich, wie beispielsweise eine elliptische, kreiszylinderförmige oder polygonische Ausführung im Querschnitt.

Die Funktionsweise der Tankvorrichtung 1 ist wie folgt: In unbestromten Zustand der Magnetspule 32 sind der erste Dichtsitz 18 und der zweite Dichtsitz 6 geschlossen, so dass kein gasförmiges Medium, hier Wasserstoff, aus dem Tankbehälterinnenraum 202 über die Ventilvorrichtung 100 in die Zulaufleitung 40 beispielsweise in Richtung eines Zulaufbereichs des Verbrauchersystems strömen kann.

Bei einer Bestromung der Magnetspule 32 über den elektrischen Anschluss 30 bildet sich ein Dauermagnetfeld 52 aus, welches einen Pluspolbereich 51 und einen Minuspolbereich 50 aufweist. Der Dauermagnet 17 liegt dabei in dem Pluspolbereich 51 des von der Magnetspule 32 erzeugten Dauermagnetfelds 52. Aufgrund der sich voneinander abstoßenden Magnetkräften des Dauermagnets 17 in dem Dauermagnetfeld 52 bewegt sich das Vorsteuerventilelement 24 von dem Gehäusedeckel 28 weg und drückt so die Feder 16 zusammen. Durch die Längsbewegung des Vorsteuerventilelements 24 hebt dieses von dem ersten Dichtsitz 18 ab und gibt so einen Öffnungsquerschnitt von dem zweiten Teilinnenraum 451 in den ersten Teilinnenraum 450 und die erste Durchgangsöffnung 20 frei.

Über die Entnahmeöffnung 14, die Kammer 35, die zweite Durchgangsöffnung 8 und den Drosselkanal 38 ist der zweite Teilinnenraum 451 fluidisch mit dem Tankbehälterinnenraum 201 verbunden, so dass dieser mit Wasserstoff befüllt ist. Durch das Abströmen des Wasserstoffs in Richtung des Absteuerkanals 2 und damit in die Zulaufleitung 40 bildet sich je nach Mediumabnahme durch das Drucksystem ein ausgleichendes Druckniveau um das Hauptventilelement 12 aus.

Durch die konstruktive Ausgestaltung des Drosselkanals 38 als Drossel wird während des Öffnungsvorgangs mehr Medium, hier Wasserstoff, über die erste Durchgangsöffnung 20 abfließen als über den Drosselkanal 38 nachströmen kann. Auf diese Weise wirkt eine zusätzliche öffnende Kraft auf das Hauptventilelement 12. Zudem wird der Druck im zweiten Teilinnenraum 451 abgesenkt.

Nach kurzer Öffnungszeit des ersten Dichtsitzes 18 ist das Vorsteuerventilelement 24 druckausgeglichen, was zu einer Druckausgeglichenheit des Hauptventilelements 12 führt.

Die Kraft der Feder 22 unterstützt die Freigabe des zweiten Dichtsitzes 6, da diese das Hauptventilelement 12 in Öffnungskraft drückt, so dass das Hauptventilelement 12 von dem zweiten Dichtsitz 6 abhebt und ein Öffnungsquerschnitt zwischen der zweiten Durchgangsöffnung 8 und dem ersten Teilinnenraum 450 freigibt. So strömt nun Wasserstoff aus dem Tankbehälterinnenraum 201 über die zweite Durchgangsöffnung 8 direkt in den ersten Teilinnenraum 450 in Richtung des Absteuerkanals 2 und damit in die Zulaufleitung 40.

Zusätzlich zu den pneumatischen Druckverhältnissen wird das Hauptventilelement 12 mit Hilfe des mechanischen Mitnehmerelements 66 kraftschlüssig über das Vorsteuerventilelement 24 zeitversetzt aus dem zweiten Dichtsitz 6 gezogen.

So sind nun der erste Dichtsitz 18 und der zweite Dichtsitz 6 freigegeben und über beide Öffnungsquerschnitte strömt Wasserstoff aus dem Tankbehälterinnenraum 201 über die Ventilvorrichtung 1 in die Zulaufleitung 40 beispielsweise in Richtung des Zulaufbereichs des Verbrauchersystems.

Ist der Öffnungsquerschnitt an dem ersten Dichtsitz 18 kleiner als der Öffnungsquerschnitt an dem zweiten Dichtsitz 6, so werden lediglich geringe magnetische Kräfte für den Öffnungsvorgang des Vorsteuerventilelements 24 an dem ersten Dichtsitz 18 benötigt.

Wird die Bestromung der Magnetspule 32 unterbrochen, so bricht das Dauermagnetfeld 52 und damit die abstoßenden Magnetkräfte des Dauermagnets 17 und des Dauermagnetfelds 52 der Magnetspule 32 zusammen und eine schließende Kraft auf das Vorsteuerventilelement 24 und das Hauptventilelement 12 wird über die Feder 16 eingeleitet. Je nach anstehendem Druck p₂, wie beispielsweise 15 bis 1000 bar, im Tankbehälterinnenraum 201 wird die schließende Kraft zusammen mit dem Druck im Halsbereich 203 der Tankvorrichtung 1 über das Vorsteuerventilelement 24 und dem ersten Dichtsitz 18 zum Hauptventilelement 12 mit dem zweiten Dichtsitz 6 eingeleitet.

Sowohl der erste Dichtsitz 18 als auch der zweite Dichtsitz 6 sind nun wieder gesperrt, sodass kein Wasserstoff mehr aus dem Tankbehälterinnenraum 201 über die Ventilvorrichtung 100 beispielsweise in Richtung des Zulaufbereichs des Verbrauchersystems strömen kann. Dieses Prinzip des selbstständigen Verschließens funktioniert auch bei einem Notfall, wenn die Stromzufuhr unterbrochen wird. Hierbei gilt es jedoch zu beachten, dass die Kraft der Feder 22, welche entgegen dem gewünschten Kraftfluss wirkt, nicht zu hoch gewählt werden darf und entsprechend abgestimmt sein muss. So wird in einem Notfall sichergestellt, dass kein Wasserstoff aus der Tankvorrichtung 1 entweichen kann.

Im Betankungsfall wird der Absteuerkanal 2 über eine angeschlossene Tankeinheit, beispielsweise eine Tankstelle, mit Druck versorgt. Dabei ist der anstehende Druck im Absteuerkanal 2 größer als in der restlichen Ventilvorrichtung 100.

Durch das unterschiedliche Druckniveau ist das Druckverhältnis am zweiten Dichtsitz 6 größer als in der restlichen Ventilvorrichtung 100, so dass das Hauptventilelement 12 das Vorsteuerventilelement 24 entgegen der Kraft der Feder 16 in Richtung des Tankbehälterinnenraums 201 drückt. Die Tankvorrichtung 1 kann nun über den freigegebenen zweiten Dichtsitz 6 und über die zweite Durchgangsöffnung 8 befüllt werden bis der Tankvorgang abgeschlossen ist. Wird der Tankvorgang beendet, findet kein weiteres Befüllen statt, sodass sich der Druck um das Hauptventilelement 12 ausgleicht. Die Kraft der Feder 16 zusammen mit dem sich einstellenden Differenzdruck aus p₂ > p₁ sorgt wieder für ein Verschließen des ersten Dichtsitzes 18 und des zweiten Dichtsitzes 6.

Die Tankvorrichtung 1 zur Speicherung eines gasförmigen Mediums kann neben brennstoffzellenbetriebenen Fahrzeugen beispielsweise auch zur Wasserstoff-Speicherung in Fahrzeugen mit einem Wasserstoff-Verbrenner als Antrieb verwendet werden.

## Patentansprüche

1. Tankvorrichtung (1) zur Speicherung eines gasförmigen Mediums, insbesondere Wasserstoff, mit einer Ventilvorrichtung (100) und einem Tankbehälter (200), wobei die Ventilvorrichtung (100) ein Ventilgehäuse (102) aufweist, in welchem Ventilgehäuse (102) ein entlang einer Längsachse (48) der Tankvorrichtung (100) bewegliches Vorsteuerventilelement (24) angeordnet ist, welches Vorsteuerventilelement (24) zum Öffnen und Schließen einer ersten Durchgangsöffnung (20) mit einem ersten Dichtsitz (18) zusammenwirkt und so ein Vorsteuerventil (240) ausbildet, wobei die Ventilvorrichtung (2) eine Magnetspule (32) umfasst, durch welche Magnetspule (32) das Vorsteuerventilelement (24) entlang der Längsachse (48) bewegbar ist, wobei in dem Ventilgehäuse (102) ein Hauptventilelement (12) angeordnet ist, welches Hauptventilelement (12) zum Öffnen und Schließen einer zweiten Durchgangsöffnung (8) mit einem zweiten Dichtsitz (6) zusammenwirkt und so ein Hauptventil (120) ausbildet, wobei das Vorsteuerventilelement (24) eine Querbohrung (241) senkrecht zu der Längsachse (48) der Tankvorrichtung (1) aufweist, welche Querbohrung (241) des Vorsteuerventilelements (24) in eine senkrecht zu der Längsachse (48) der Tankvorrichtung (1) angeordneten Querbohrung (121) des Hauptventilelements (12) mündet, wobei in der Querbohrung (241) des Vorsteuerventilelements (24) und in der Querbohrung (121) des Hauptventilelements (12) zumindest teilweise (120) ein Mitnehmerelement (66) angeordnet ist, **dadurch gekennzeichnet, dass** der zweite Dichtsitz (6) als konischer Absatz (36) an dem Ventilgehäuse (102) ausgebildet ist und das Vorsteuerventilelement (24) einen Absatz (43) aufweist, an welchem Absatz (43) sich eine Feder (16) abstützt und das Vorsteuerventilelement (24) mit einer Kraft in Richtung des einen Endes (42) des Vorsteuerventilelements (24) beaufschlagt, wobei bei Nicht-Bestromung der Magnetspule (32) eine schließende Kraft auf das Vorsteuerventilelement (24) und das Hauptventilelement (12) über die Feder (16) wirkt und wobei zwischen dem Ventilgehäuse (102) und einer Anformung (37) des Hauptventilelements (12), welche Anformung (37) zum Öffnen und Schließen der zweiten Durchgangsöffnung (8) mit dem zweiten Dichtsitz (6) zusammenwirkt, ein Drosselkanal (38) ausgebildet ist, welcher Drosselkanal (38) entgegen der Richtung des zweiten Dichtsitzes (6) eine konische Erweiterung aufweist, wodurch eine Drosselwirkung ausgebildet ist.

2. Tankvorrichtung (1) nach Anspruch 1, **dadurch gekennzeichnet, dass** das Mitnehmerelement (66) stiftförmig ausgebildet ist.

3. Tankvorrichtung (1) nach Anspruch 1 oder 2, **dadurch gekennzeichnet, dass** an einem Ende (42) des Vorsteuerventilelements (24) ein Dauermagnet (17) angeordnet ist, welcher Dauermagnet (17) dergestalt in der Ventilvorrichtung (100) angeordnet ist, dass ein Pluspolelement (170) des Dauermagneten (17) in Richtung eines Gehäusedeckels (28) der Ventilvorrichtung (100) und ein Minuspolelement (171) des Dauermagneten (17) in Richtung des Tankbehälters (200) angeordnet ist, wobei der Dauermagnet (17) bei bestromter Magnetspule (32) in einem Pluspolbereich (51) eines von der Magnetspule (32) erzeugten Dauermagnetfelds (52) angeordnet ist.

4. Tankvorrichtung (1) nach einem der vorhergehenden Ansprüche, **dadurch gekennzeichnet, dass** die Ventilvorrichtung (2) bei bestromter Magnetspule (32) in Richtung des Tankbehälters (200) öffenbar ist.

5. Tankvorrichtung (1) nach einem der vorhergehenden Ansprüche, **dadurch gekennzeichnet, dass** die Durchgangsöffnung (8) in dem Ventilgehäuse (102) auf Höhe des Drosselkanals (38) ausgebildet ist und in den Drosselkanal (38) mündet.

6. Tankvorrichtung (1) nach einem der vorhergehenden Ansprüche, **dadurch gekennzeichnet, dass** in dem Ventilgehäuse (102) eine Kammer (35) ausgebildet ist, welche Kammer (35) mittels der Durchgangsöffnung (8) mit dem Drosselkanal (38) verbunden ist.

7. Tankvorrichtung (1) nach dem vorhergehenden Anspruch, **dadurch gekennzeichnet, dass** die Ventilvorrichtung (100) in einem Halsbereich (203) der Tankvorrichtung (1) angeordnet und gegen einen Tankboden (140) innerhalb des Halsbereichs (203) gepresst ist.

8. Tankvorrichtung (1) nach dem vorhergehenden Anspruch, **dadurch gekennzeichnet, dass** in dem Tankboden (140) eine Entnahmeöffnung (14) ausgebildet ist, welche einen Tankbehälterinnenraum (201) und die Kammer (35) fluidisch miteinander verbindet.

9. Tankvorrichtung (1) nach einem der vorhergehenden Ansprüche, **dadurch gekennzeichnet, dass** das Hauptventilelement (12) mittels einer Feder (22) mit einer Kraft in Richtung des Tankbehälterinnenraums (201) beaufschlagt ist, wodurch das Hauptventilelement (12) mit einer Kraft in Richtung des ersten Dichtsitzes (18) und entgegen der Richtung des zweiten Dichtsitzes (6) beaufschlagt ist.

10. Tankvorrichtung (1) nach einem der vorhergehenden Ansprüche, **dadurch gekennzeichnet, dass** in dem Ventilgehäuse (102) ein Innenraum (45) ausgebildet ist, welcher Innenraum (45) durch das Hauptventilelement (12) in einen ersten Teilinnenraum (450) und einen zweiten Teilinnenraum (451) aufgeteilt ist.

11. Tankvorrichtung (1) nach dem vorhergehenden Anspruch, **dadurch gekennzeichnet, dass** der erste Teilinnenraum (450) mittels eines in dem Ventilgehäuse (102) ausgebildeten Absteuerkanals (2) mit einer Zulaufleitung (40) verbunden ist, welche Zulaufleitung (40) mit einem Zulaufbereich eines Verbrauchersystems verbindbar ist.

12. Brennstoffzellensystem mit einer Tankvorrichtung (1) zur Speicherung von Wasserstoff für den Betrieb einer Brennstoffzelle nach einem der Ansprüche 1 bis 11.

13. Brennstoffzellenbetriebenes Fahrzeug mit einer Tankvorrichtung (1) zur Speicherung von Wasserstoff für den Betrieb einer Brennstoffzelle nach einem der Ansprüche 1 bis 11.

## Claims

1. Tank device (1) for storing a gaseous medium, in particular hydrogen, having a valve device (100) and a tank container (200), wherein the valve device (100) has a valve housing (102), in which valve housing (102) a pilot control valve element (24) which is movable along a longitudinal axis (48) of the tank device (100) is arranged, which pilot control valve element (24) interacts with a first sealing seat (18) in order to open and close a first passage opening (20) and thus forms a pilot control valve (240), wherein the valve device (2) comprises a solenoid coil (32), by means of which solenoid coil (32) the pilot control valve element (24) is movable along the longitudinal axis (48), wherein a main valve element (12) is arranged in the valve housing (102), which main valve element (12) interacts with a second sealing seat (6) in order to open and close a second passage opening (8) and thus forms a main valve (120), wherein the pilot control valve element (24) has a transverse bore (241) perpendicular to the longitudinal axis (48) of the tank device (1), which transverse bore (241) of the pilot control valve element (24) opens into a transverse bore (121) of the main valve element (12), which transverse bore is arranged perpendicular to the longitudinal axis (48) of the tank device (1), wherein a driver element (66) is at least partially (120) arranged in the transverse bore (241) of the pilot control valve element (24) and in the transverse bore (121) of the main valve element (12), **characterized in that** the second sealing seat (6) is designed as a conical shoulder (36) on the valve housing (102), and the pilot control valve element (24) has a shoulder (43), on which shoulder (43) a spring (16) is supported and acts upon the pilot control valve element (24) with a force in the direction of the one end (42) of the pilot control valve element (24), wherein, when the solenoid coil (32) is not energized, a closing force acts on the pilot control valve element (24) and the main valve element (12) via the spring (16), and wherein a throttle channel (38) is formed between the valve housing (102) and a protuberance (37) of the main valve element (12), which protuberance (37) interacts with the second sealing seat (6) in order to open and close the second passage opening (8), which throttle channel (38) has a conical widening counter to the direction of the second sealing seat (6), thus forming a throttle effect.

2. Tank device (1) according to Claim 1, **characterized in that** the driver element (66) is pin-shaped.

3. Tank device (1) according to Claim 1 or 2, **characterized in that** a permanent magnet (17) is arranged at one end (42) of the pilot control valve element (24), which permanent magnet (17) is arranged in the valve device (100) in such a way that a positive pole element (170) of the permanent magnet (17) is arranged in the direction of a housing cover (28) of the valve device (100) and a negative pole element (171) of the permanent magnet (17) is arranged in the direction of the tank container (200), wherein, when the solenoid coil (32) is energized, the permanent magnet (17) is arranged in a positive pole region (51) of a permanent magnetic field (52) generated by the solenoid coil (32).

4. Tank device (1) according to one of the preceding claims, **characterized in that** the valve device (2) is openable in the direction of the tank container (200) when the solenoid coil (32) is energized.

5. Tank device (1) according to one of the preceding claims, **characterized in that** the passage opening (8) in the valve housing (102) is formed level with the throttle channel (38) and opens into the throttle channel (38).

6. Tank device (1) according to one of the preceding claims, **characterized in that** a chamber (35) is formed in the valve housing (102), which chamber (35) is connected to the throttle channel (38) by means of the passage opening (8).

7. Tank device (1) according to the preceding claim, **characterized in that** the valve device (100) is arranged in a neck region (203) of the tank device (1) and is pressed against a tank base (140) within the neck region (203).

8. Tank device (1) according to the preceding claim, **characterized in that** in the tank base (140) a removal opening (14) is formed which connects a tank container interior (201) and the chamber (35) fluidically to each other.

9. Tank device (1) according to one of the preceding claims, **characterized in that** the main valve element (12) is acted upon with a force in the direction of the tank container interior (201) by means of a spring (22), as a result of which the main valve element (12) is acted upon with a force in the direction of the first sealing seat (18) and counter to the direction of the second sealing seat (6).

10. Tank device (1) according to one of the preceding claims, **characterized in that** an interior space (45) is formed in the valve housing (102), which interior space (45) is divided into a first partial interior space (450) and a second partial interior space (451) by the main valve element (12).

11. Tank device (1) according to the preceding claim, **characterized in that** the first partial interior space (450) is connected by means of a spill channel (2) formed in the valve housing (102) to a feed line (40), which feed line (40) is connectable to a feed region of a load system.

12. Fuel cell system having a tank device (1) for storing hydrogen for the operation of a fuel cell according to one of Claims 1 to 11.

13. Fuel-cell-operated vehicle having a tank device (1) for storing hydrogen for the operation of a fuel cell according to one of Claims 1 to 11.

## Revendications

1. Dispositif (1) formant réservoir pour le stockage d'un milieu gazeux, en particulier de l'hydrogène, comprenant un dispositif (100) formant vanne et un réservoir (200), le dispositif (100) formant vanne présentant un corps de vanne (102), dans lequel corps de vanne (102) est agencé un élément (24) de vanne pilote, mobile le long d'un axe longitudinal (48) du dispositif (100) formant réservoir, lequel élément (24) de vanne pilote coopère avec un premier siège d'étanchéité (18) pour ouvrir et fermer une première ouverture de passage (20), et forme ainsi une vanne pilote (240), le dispositif (2) formant vanne comprenant une bobine magnétique (32), l'élément (24) de vanne pilote étant apte à être déplacé le long de l'axe longitudinal (48) par la bobine magnétique (32), un élément (12) de vanne principale étant agencé dans le corps de vanne (102), lequel élément (12) de vanne principale coopère avec un deuxième siège d'étanchéité (6) pour ouvrir et fermer une deuxième ouverture de passage (8) et forme ainsi une vanne principale (120),
l'élément (24) de vanne pilote présentant un alésage transversal (241) perpendiculaire à l'axe longitudinal (48) du dispositif (1) formant réservoir, cet alésage transversal (241) de l'élément (24) de vanne pilote débouchant dans un alésage transversal (121) de l'élément (12) de vanne principale agencé perpendiculairement à l'axe longitudinal (48) du dispositif (1) formant réservoir, un élément d'entraînement (66) étant agencé au moins partiellement (120) dans l'alésage transversal (241) de l'élément (24) de vanne pilote et dans l'alésage transversal (121) de l'élément (12) de vanne principale, **caractérisé en ce que** le deuxième siège d'étanchéité (6) est réalisé sous la forme d'un épaulement conique (36) sur le corps de vanne (102) et **en ce que** l'élément (24) de vanne pilote présente un épaulement (43), sur lequel épaulement (43) un ressort (16) s'appuie et qui exerce une force sur l'élément (24) de vanne pilote en direction d'une extrémité (42) de l'élément (24) de vanne pilote ; lorsque la bobine magnétique (32) n'est pas alimentée en courant, une force de fermeture agit sur l'élément (24) de vanne pilote et l'élément (12) de vanne principale par l'intermédiaire du ressort (16), et entre le corps de vanne (102) et une partie moulée (37) de l'élément (12) de vanne principale, cette partie moulée (37) coopérant avec le deuxième siège d'étanchéité (6) pour ouvrir et fermer la deuxième ouverture de passage (8), un canal d'étranglement (38) étant formé, lequel canal d'étranglement (38) présente un élargissement conique dans la direction opposée au deuxième siège d'étanchéité (6), ce qui crée un effet d'étranglement.

2. Dispositif (1) formant réservoir selon la revendication 1, **caractérisé en ce que** l'élément d'entraînement (66) est en forme de tige.

3. Dispositif (1) formant réservoir selon la revendication 1 ou la revendication 2, **caractérisé en ce qu'**un aimant permanent (17) est agencé à une extrémité (42) de l'élément (24) de vanne pilote, lequel aimant permanent (17) est agencé dans le dispositif (100) formant vanne de telle sorte qu'un élément de pôle positif (170) de l'aimant permanent (17) soit agencé en direction d'un couvercle de boîtier (28) du dispositif (100) formant vanne et qu'un élément de pôle négatif (171) de l'aimant permanent (17) soit agencé en direction du réservoir (200), l'aimant permanent (17) étant agencé dans une zone de pôle positif (51) d'un champ magnétique permanent (52) généré par la bobine magnétique (32) lorsque la bobine magnétique (32) est alimentée en courant.

4. Dispositif (1) formant réservoir selon l'une des revendications précédentes, **caractérisé en ce que** le dispositif (2) formant vanne est apte à être ouvert en direction du réservoir (200) lorsque la bobine magnétique (32) est alimentée en courant.

5. Dispositif (1) formant réservoir selon l'une des revendications précédentes, **caractérisé en ce que** l'ouverture de passage (8) est formée dans le corps de vanne (102) à hauteur du canal d'étranglement (38) et débouche dans le canal d'étranglement (38).

6. Dispositif (1) formant réservoir selon l'une des revendications précédentes, **caractérisé en ce qu'**une chambre (35) est formée dans le corps de vanne (102), laquelle chambre (35) est reliée au canal d'étranglement (38) par l'intermédiaire de l'ouverture de passage (8).

7. Dispositif (1) formant réservoir selon la revendication précédente, **caractérisé en ce que** le dispositif (100) formant vanne est agencé dans une zone de col (203) du dispositif (1) formant réservoir et est pressé contre un fond de réservoir (140) à l'intérieur de la zone de col (203).

8. Dispositif (1) formant réservoir selon la revendication précédente, **caractérisé en ce qu'**une ouverture de prélèvement (14) est formée dans le fond du réservoir (140), laquelle relie fluidiquement un espace intérieur du réservoir (201) et la chambre (35).

9. Dispositif (1) formant réservoir selon l'une des revendications précédentes, **caractérisé en ce que** l'élément (12) de vanne principale est sollicité par un ressort (22) avec une force en direction de l'espace intérieur du réservoir (201), ce qui fait que l'élément (12) de vanne principale est sollicité avec une force en direction du premier siège d'étanchéité (18) et dans le sens opposé au deuxième siège d'étanchéité (6).

10. Dispositif (1) formant réservoir selon l'une des revendications précédentes, **caractérisé en ce qu'**un espace intérieur (45) est formé dans le corps de vanne (102), lequel espace intérieur (45) est divisé par l'élément (12) de vanne principale en un premier sous-espace intérieur (450) et un deuxième sous-espace intérieur (451).

11. Dispositif (1) formant réservoir selon la revendication précédente, **caractérisé en ce que** le premier sous-espace intérieur (450) est relié à une conduite d'alimentation (40) au moyen d'un canal de commande (2) formé dans le corps de vanne (102), laquelle conduite d'alimentation (40) est apte à être reliée à une zone d'alimentation d'un système consommateur.

12. Système de pile à combustible avec un dispositif (1) formant réservoir pour le stockage d'hydrogène pour le fonctionnement d'une pile à combustible selon l'une des revendications 1 à 11.

13. Véhicule fonctionnant avec une pile à combustible comprenant un dispositif (1) formant réservoir de stockage d'hydrogène pour le fonctionnement d'une pile à combustible selon l'une des revendications 1 à 11.
